# EUROPEAN PATENT SPECIFICATION

(11) **EP 2 443 366 B1**
(45) Date of publication and mention of the grant of the patent: **19.03.2014**
(21) Application number: 10728397.0
(22) Date of filing: 16.06.2010
(51) Int. Cl.: F16H 57/04

(54) **METHOD FOR OPERATING A CONTINUOUSLY VARIABLE TRANSMISSION INCORPORATING A DRIVE BELT**
VERFAHREN FÜR DEN BETRIEB EINES STUFENLOSEN GETRIEBES MIT EINEM ANTRIEBSRIEMEE
PROCEDE D'ACTIONNEMENT D'UNE TRANSMISSION A VARIATION CONTINUE RENFERMANT UNE COURROIE D'ENTRAINEMENT

(30) Priority: 17.06.2009 NL 2003033
(43) Date of publication of application: 25.04.2012
(73) Proprietor: Robert Bosch GmbH, 70442 Stuttgart (DE)
(72) Inventor: VAN DER MEER, Comelis, Johannes, Maria, NL-5032 XG Tilburg (NL)
(74) Representative: Plevier, Gabriel Anton Johan Maria
(86) International application number: PCT/NL2010/000097
(87) International publication number: WO 2010/147458

(56) References cited:
- EP-A- 0 626 526
- EP-A- 0 688 980
- EP-A- 1 167 829
- EP-A- 1 191 258
- EP-A- 1 403 564
- WO-A-2009/076999
- DE-A1- 10 026 223
- DE-A1-102004 029 680
- JP-A- 9 053 711
- US-B2- 7 125 355

## Description

The present invention relates to a method for operating a continuously variable transmission incorporating a drive belt according to the preamble of the claim 1 hereinafter, which transmission is well known in the art, for example from the European patent EP-A-1 167 829.

The drive belt of such a transmission is in the form of a so-called pushbelt that is known per se, for example from the European patent EP-A-0 626 526. The known pushbelt comprises steel transverse elements that are included in the belt slidingly relative to the circumference of an endless tensile means thereof that primarily has the function of confining and guiding the transverse elements. The transverse elements of the known drive belt are made of the carbon containing steel 75Cr1 that includes more than 0.7 up to 0.8 % by weight carbon and, typically, between 0.35 and 0.55 % by weight chromium. The endless tensile means is typically also made of steel, in particular a maraging steel, and composed of two sets of a number a mutually nested, i.e. radially stacked flat and thin rings.

As part of the conventional manufacturing method of the drive belt, an example whereof is provided by the European patent publication EP-A-1 233 207, the steel transverse elements are hardened by means of a conventional process of quench hardening, which process includes the steps of austenitizing, quenching and tempering. The heat treatment step of tempering is included to reduce brittleness and/or improve the ductility and fatigue properties of the quench hardened steel. As a result of tempering process step also the hardness of the steel is reduced as compared to its hardness immediately after the process step of quenching that amounts to more than 65 HRC (Rockwell C-scale hardness) up to 68 HRC. After tempering the (core) hardness of the transverse elements is required to have a value in the range from 58 HRC up to and including 62 HRC for application in the drive belt.

The known transmission comprises two pulleys, each provided with two substantially conical steel discs where between an effectively V-shaped circumference groove of variable width is defined. The drive belt of the transmission being wrapped around and in frictional contact with the pulleys in the said grooves thereof. In the transmission a torque is transferred from one pulley to the other by clamping the drive belt between the discs of the respective pulleys under the influence of respective clamping forces, for which purpose at least one disc of the pulley is included axially moveable by means of an actuator. The said transfer of torque is realized by frictionally transferring a rotational movement of a driving pulley to the drive belt, of which the transverse elements are provided with predominantly axially oriented contact areas for contacting the discs of the pulley. At the other, i.e. driven pulley, the force underlying said rotational movement of the driving pulley is frictionally transferred from said belt to the discs of the driven pulley. The radius at which the drive belt runs in each pulley can be changed by changing the clamping force at each pulley relative to one another. The mathematical quotient between such radii represents a geometric ratio of the transmission, whereas a ratio between the rotational speeds of the pulleys represents the speed ratio of the transmission.

It is imperative for the proper functioning and durability of the transmission that the belt and the pulley components thereof are actively lubricated during operation, whereby also heat that is unavoidably generated in the frictional contact there between is transported away from such contact. The transverse elements of the belt are normally considered to be the most critical components in this respect, since the steel thereof has been quench hardened and tempered in order to be able to reliably cope with the high level of the said clamping force applied in contemporary transmission designs. If heated above a certain critical temperature, the tempering process and the hardness reduction, which is associated therewith, are supposed to continue, such that the transverse elements would wear-out rapidly or even break under the influence of the clamping force. Therefore, the known transmission is known to include a cooling device for supplying a cooling and lubricating agent, such as a synthetic oil, to the belt and for subsequently re-circulating it via a reservoir by means of a pump, which known cooling device includes a component for cooling the cooling agent itself, i.e. a heat exchange device such as an oil cooler.

During operation of the transmission the cooling device circulates a continuous flow of cooling agent through the transmission to take up and remove the heat generated in the frictional contacts between the belt and the pulleys thereof. Conventionally, the cooling agent supplied to the belt is required to have a temperature of about 80 °C (degrees Centigrade) or less during operation of the transmission As an alternative requirement, the temperature of the cooling agent that is returned from the belt and/or the pulleys to the reservoir can be defined, in which case the conventionally allowed maximum temperature of the returning cooling agent is 140 °C. This latter maximum temperature requirement incorporates a margin of about 20 °C to the local temperature in the actual frictional contact between the drive belt's transverse elements and the pulley discs, which may thus reach a temperature up to 160 °C.

The above temperatures are considered safe in that a (continued) tempering of the transverse elements does not occur in the transmission, at least not to the extent that the hardness value thereof would drop below the conventionally specified lower threshold value of 58 HRC. Certainly in transmissions that are used in passenger vehicles for transmitting a mid to high engine power of 50 kW or more, the cooling device is required to include the said component dedicated to the cooling of the cooling agent, in order to satisfy the above requirements in relation to the temperature thereof.

The flow and temperature of the cooling agent supplied to the belt largely determine the heat that is removed thereby and thus ultimately the maximum temperature that the belt reaches during operation of the transmission. In this respect it needs to be considered that the higher the supply flow and/or the lower the supply temperature of the cooling agent is, the lower the overall efficiency of the transmission becomes, because of the increasing amount of power consumed by the cooling device. Therefore, it has been a general development aim to increase the transmission efficiency by lowering the supply flow, for example by controlling it in accordance with the relevant transmission conditions and/or by directing the supply flow firstly to the hottest part of the transmission. Some examples of these known efforts are provided by the patent publications JP-A-09/053711, EP-A-0 688 980 and US-A-7,125,355.

It is an object of the present invention to improve the known transmission, in particular its operating efficiency by reducing the amount of power required for the operation of the cooling device.

According to the invention the above object is realized by a transmission incorporating the features of the characterizing portion of claim 1. The present invention has found a solution not in optimizing the cooling or cooling device as such, but rather it was surprisingly found by experiment that a prolonged mild tempering of the transverse elements, i.e. for up to 400 hours at a temperature of more than 160 °C up to 200 °C, does in fact not cause a substantial drop in the core hardness thereof. Rather, a drop of only 1 HRC point or less was measured in these conditions. Thus, in these conditions the ultimate hardness of the transverse elements was found to amount to 57 HRC or more, which value is of course only slightly lower than the said conventionally specified lower hardness threshold value of 58 HRC and which value is considered entirely satisfactory for the drive belt application. Still, the mere fact that in the said conditions the core hardness of the transverse element does indeed drop below such lower threshold value (to a previously unknown value), has in the past prevented further investigations and/or experimentation in the above respect.

It may thus be concluded that even a transmission of conventional design can be operated at a considerably higher temperature than what was considered safe prior to the present invention. The practical consequence hereof is that the minimally required supply flow of the cooling agent is favorably reduced and/or that the maximally allowed supply temperature of the cooling agent is favorably increased. As a result, the cooling effort and/or capacity of the cooling device can be significantly reduced. Potentially, the heat exchange device can even be omitted from the transmission altogether.

According to the invention, the temperature of the cooling agent that is supplied to the belt during operation of the transmission is controlled to be higher than 100 °C, up to 140 °C at most, at least during normal operation, i.e. as defined by typical, everyday use of the transmission. Such not merely incidentally, but also for a prolonged period of time, i.e. for a substantial part of the overall operation or service time of the transmission. Further according to the invention, the temperature of the cooling agent that is returned from the belt and/or the pulleys to the reservoir exceeds 140 °C during operation, however, it should preferably not exceed 180 °C.

It is noted that the non pre-published international patent application PCT/- EP2007/064037 in the name of applicant concerns a corresponding transmission control method, however, in this case under the precondition that the transverse elements are not only quench (i.e. core) hardened, but also case (i.e. surface) hardened, i.e. are provided with an additionally hardened surface layer. The hardness of this surface layer would than not be reduced by the continued tempering process occurring during operation of the transmission. According to the present invention, however, such case hardening of the transverse elements was found to be not necessary after all, at least not as a generally applicable, absolute requirement, because the said continued tempering process does in reality not cause the substantial drop in core hardness that was previously anticipated, i.e. prior to the present invention. The invention therefore, in a detailed embodiment, specifically relates to a transmission incorporating a drive belt whereof the transverse elements are not case hardened, i.e. that are not provided with a surface layer that is additionally hardened relative to other parts thereof, i.e. whereof the surface hardness essentially corresponds with the core hardness thereof.

Further according to the invention, the hardness of the pulley discs is preferably set to a value that deviates less than 4 HRC points from the hardness value of the transverse elements. More preferably, the hardness of the pulley discs is about 57 HRC. By such equalization of the hardness values of these transmission components, the combined mechanical wear of the contact surfaces in the said frictional contact is favorably minimized.

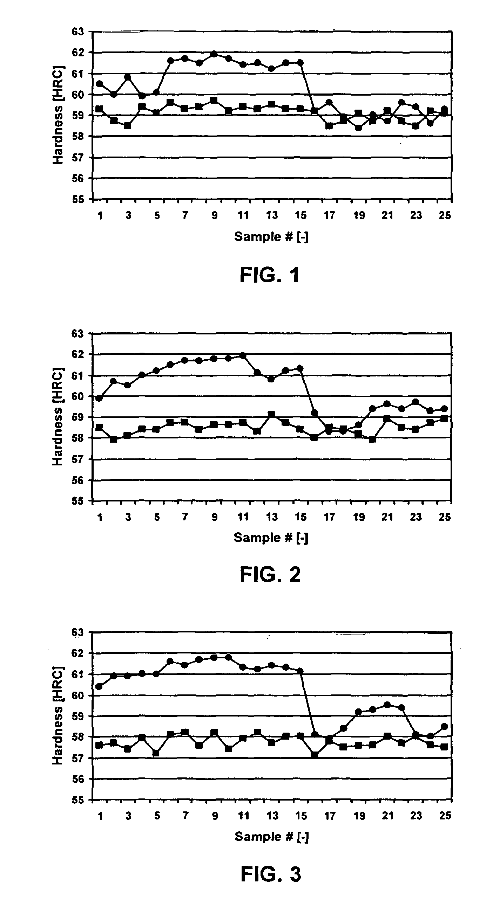

In the accompanying drawing figures 1, 2 and 3 the results of the experiments underlying the invention are summarized in respective graphs.

In the graph of Figure 1 the circles indicate the respective HRC hardness of 25 quench hardened transverse elements ("samples"), whereas the squares indicate the respective HRC hardness of the same samples after they have also been subjected to prolonged tempering at 160 °C during 400 hours. These latter conditions are considered representative of the conditions that prevail in the transmission during conventional operation thereof. From this graph it appears that in these conditions the hardness of the samples does indeed not drop to below the conventionally applied lower threshold of 58 HRC.

In the graph of Figure 2 the circles indicate the respective HRC hardness of 25 further quench hardened samples, whereas the squares indicate the respective HRC hardness of the same samples after they have also been subjected to prolonged tempering at 180 °C during 400 hours. From this graph it appears that in the latter conditions the hardness of a few samples drops below the said threshold of 58 HRC, however, only marginally. The thus resulting hardness of the transverse elements is considered entirely satisfactory for the drive belt application of transverse elements in a passenger vehicle transmission.

In the graph of Figure 3 the circles indicate the respective HRC hardness of 25 further quench hardened samples, whereas the squares indicate the respective HRC hardness of the same samples after they have also been subjected to prolonged tempering at 200 °C during 400 hours. From this graph it appears that in the latter conditions the hardness of most samples drops below the said threshold of 58 HRC, however, still remaining above -on average even well above- 57 HRC. The thus resulting hardness is still entirely satisfactory for the drive belt application of transverse elements in a passenger vehicle transmission.

## Claims

1. Method for operating a continuously variable transmission with a drive belt comprising an endless tensile means, as well as transverse elements that are provided in the drive belt moveable along the circumference of the endless tensile means, which transverse elements are made from hardened steel and which transmission further comprises a cooling device for the supply to the drive belt of a volume flow of a coolant, **characterized in that**, the temperature of the coolant that is supplied to the drive belt is controlled to a value in the range between 100 °C and 140 °C, which coolant is subsequently discharged to a reservoir at a temperature that exceeds the value of 140 °C and preferably exceeds the value of 160 °C, but that does not exceed the value of 180 °C.

2. Method according to claim 1, **characterized in that** the cooling device is provided with means for the control of the temperature of the coolant, more in particular is provided with heat exchange device or oil cooler.

3. Method according to claim 1 or 2, **characterized in that** the cooling device is provided with means for the control of a volume flow of the coolant that is supplied to the drive belt.

4. Method according to any one of the preceding claims, **characterized in that**, the core hardness of at least a part of the transverse elements amounts to at least 57 HRC and at most 58 HRC.

5. Method according to claim 4, **characterized in that**, the surface hardness of at least a part of the transverse elements more or less corresponds to the core hardness thereof.

6. Method according to any one of the preceding claims, **characterized in that**, the continuously variable transmission also comprises a pulley with steel discs for the frictional contact with the drive belt and **in that** the hardness of the discs approximately amounts to 57 HRC.

7. Passenger vehicle provided with an engine and a continuously variable transmission with a drive belt and with a cooling device, which transmission is operated in accordance with the method according to claim 1, **characterized in that**, the cooling device is not provided with heat exchange device or oil cooler.

8. Passenger vehicle according to claim 7, **characterized in that**, the engine has an engine power of 50 kW or more.

## Patentansprüche

1. Verfahren zum Betreiben eines stufenlosen Getriebes mit einem Antriebsriemen, der ein Endloszugmittel sowie Querelemente umfasst, die entlang dem Umfang des Endloszugmittels beweglich im Antriebsriemen vorgesehen sind, wobei die Querelemente aus gehärtetem Stahl hergestellt sind und das Getriebe ferner eine Kühlvorrichtung zur Zufuhr eines Volumenstroms eines Kühlmittels zum Antriebsriemen umfasst, **dadurch gekennzeichnet, dass** die Temperatur des dem Antriebsriemen zugeführten Kühlmittels auf einen Wert im Bereich von 100°C bis 140°C geregelt wird, wobei das Kühlmittel mit einer Temperatur von über 140°C und vorzugsweise über 160°C, jedoch nicht über 180°C, im Anschluss in einen Behälter abgelassen wird.

2. Verfahren nach Anspruch 1, **dadurch gekennzeichnet, dass** die Kühlvorrichtung mit Mitteln zur Regelung der Kühlmitteltemperatur versehen ist und insbesondere mit einer Wärmeaustauschvorrichtung oder einem Ölkühler versehen ist.

3. Verfahren nach Anspruch 1 oder 2, **dadurch gekennzeichnet, dass** die Kühlvorrichtung mit Mitteln zur Steuerung eines dem Antriebsriemen zugeführten Kühlmittelvolumenstroms versehen ist.

4. Verfahren nach einem der vorhergehenden Ansprüche, **dadurch gekennzeichnet, dass** die Kernhärte mindestens eines Teils der Querelemente mindestens 57 HRC und höchstens 58 HRC beträgt.

5. Verfahren nach Anspruch 4, **dadurch gekennzeichnet, dass** die Oberflächenhärte mindestens eines Teils der Querelemente mehr oder weniger der Kernhärte davon entspricht.

6. Verfahren nach einem der vorhergehenden Ansprüche, **dadurch gekennzeichnet, dass** das stufenlose Getriebe auch eine Riemenscheibe mit Stahlscheiben für den Reibkontakt mit dem Antriebsriemen umfasst und dass die Härte der Scheiben ungefähr 57 HRC beträgt.

7. Personenkraftwagen, der mit einem Motor und einem stufenlosen Getriebe mit einem Antriebsriemen sowie mit einer Kühlvorrichtung versehen ist, wobei das Getriebe gemäß dem Verfahren nach Anspruch 1 betrieben wird, **dadurch gekennzeichnet, dass** die Kühlvorrichtung nicht mit einer Wärmetauschvorrichtung oder einem Ölkühler versehen ist.

8. Personenkraftwagen nach Anspruch 7, **dadurch gekennzeichnet, dass** der Motor eine Motorleistung von 50 kW oder mehr aufweist.

## Revendications

1. Procédé d'actionnement d'une transmission à variation continue comportant une courroie d'entraînement comprenant un moyen de traction sans fin ainsi que des éléments transversaux qui sont prévus dans la courroie d'entraînement de manière mobile le long de la circonférence du moyen de traction sans fin, lesquels éléments transversaux sont constitués d'acier trempé et laquelle transmission comprend en outre un dispositif de refroidissement pour fournir à la courroie d'entraînement un débit volumique d'un liquide de refroidissement, **caractérisé en ce que** la température du liquide de refroidissement qui est fourni à la courroie d'entraînement est contrôlée de manière à avoir une valeur dans la plage entre 100 °C et 140 °C, lequel liquide de refroidissement est ensuite évacué jusqu'à un réservoir à une température qui dépasse la valeur de 140 °C et de préférence dépasse la valeur de 160 °C mais qui ne dépasse pas la valeur de 180 °C.

2. Procédé selon la revendication 1, **caractérisé en ce que** le dispositif de refroidissement est pourvu de moyens pour le contrôle de la température du liquide de refroidissement, et plus particulièrement pourvu d'un dispositif d'échange de chaleur ou d'un refroidisseur d'huile.

3. Procédé selon la revendication 1 ou 2, **caractérisé en ce que** le dispositif de refroidissement est pourvu de moyens pour le contrôle d'un débit volumique du liquide de refroidissement qui est fourni à la courroie d'entraînement.

4. Procédé selon l'une quelconque des revendications précédentes, **caractérisé en ce que** la dureté à coeur d'au moins une partie des éléments transversaux s'élève à au moins 57 HRC et au plus à 58 HRC.

5. Procédé selon la revendication 4, **caractérisé en ce que** la dureté de surface d'au moins une partie des éléments transversaux correspond plus ou moins à la dureté à coeur de ceux-ci.

6. Procédé selon l'une quelconque des revendications précédentes, **caractérisé en ce que** la transmission à variation continue comprend également une poulie comportant des disques en acier pour le contact de frottement avec la courroie d'entraînement, et **en ce que** la dureté des disques s'élève approximativement à 57 HRC.

7. Véhicule de tourisme pourvu d'un moteur et d'une transmission à variation continue comportant une courroie d'entraînement et comportant un dispositif de refroidissement, laquelle transmission est actionnée conformément au procédé selon la revendication 1, **caractérisé en ce que** le dispositif de refroidissement n'est pas pourvu d'un dispositif d'échange de chaleur ou d'un refroidisseur d'huile.

8. Véhicule de tourisme selon la revendication 7, **caractérisé en ce que** le moteur a une puissance de moteur de 50 kW ou plus.
